(19) Europäisches Patentamt
European Patent Office
Office européen des brevets

(11) **EP 4 112 559 B1**

(12) **EUROPEAN PATENT SPECIFICATION**

(45) Date of publication and mention
of the grant of the patent:
**18.02.2026 Bulletin 2026/08**

(21) Application number: **21761344.7**

(22) Date of filing: **25.02.2021**

(51) International Patent Classification (IPC):
$C01G\ 53/00\ ^{(2025.01)}$     $H01M\ 4/36\ ^{(2006.01)}$
$H01M\ 4/505\ ^{(2010.01)}$     $H01M\ 4/525\ ^{(2010.01)}$

(52) Cooperative Patent Classification (CPC):
**C01G 53/54; H01M 4/131; H01M 4/36; H01M 4/364;
H01M 4/366; H01M 4/485; H01M 4/505;
H01M 4/525; H01M 10/052; H01M 10/0525;**
C01P 2002/72; C01P 2004/45; C01P 2004/51;
C01P 2004/61; C01P 2004/64;     (Cont.)

(86) International application number:
**PCT/JP2021/007143**

(87) International publication number:
**WO 2021/172445 (02.09.2021 Gazette 2021/35)**

(54) **POSITIVE ELECTRODE ACTIVE MATERIAL FOR NON-AQUEOUS ELECTROLYTE SECONDARY
BATTERY, AND NON-AQUEOUS ELECTROLYTE SECONDARY BATTERY**

POSITIVELEKTRODENAKTIVMATERIAL FÜR SEKUNDÄRBATTERIE MIT WASSERFREIEM
ELEKTROLYT UND SEKUNDÄRBATTERIE MIT WASSERFREIEM ELEKTROLYT

MATÉRIAU ACTIF D'ÉLECTRODE POSITIVE POUR BATTERIE SECONDAIRE À ÉLECTROLYTE
NON AQUEUX, ET BATTERIE SECONDAIRE À ÉLECTROLYTE NON AQUEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2020 JP 2020032905**

(43) Date of publication of application:
**04.01.2023 Bulletin 2023/01**

(73) Proprietor: **Panasonic Intellectual Property
Management Co., Ltd.
Osaka-shi, Osaka 540-6207 (JP)**

(72) Inventors:
• **MURATA, Akiko
Osaka-shi, Osaka 540-6207 (JP)**
• **KAWADA, Hiroshi
Osaka-shi, Osaka 540-6207 (JP)**
• **HIBINO, Mitsuhiro
Osaka-shi, Osaka 540-6207 (JP)**

(74) Representative: **Novagraaf International SA
Chemin de l'Echo 3
1213 Onex, Geneva (CH)**

(56) References cited:
**WO-A1-2020/262348     JP-A- 2005 322 480
JP-A- 2006 351 487     JP-A- 2007 299 668**

• **ZHAN HUI ET AL: "Investigation on a new doped
spinel phase-LiSrxMn2-xO4", vol. 58, no. 26, 1
October 2004 (2004-10-01), AMSTERDAM, NL,
pages 3276 - 3279, XP093065412, ISSN:
0167-577X, Retrieved from the Internet
<URL:https://pdf.sciencedirectassets.com/
271572/1-s2.0-S0167577X00X03084/
1-s2.0-S0167577X04004197/main.pdf?
X-Amz-Security-Token=IQoJb3JpZ2luX2V
jEAYaCXVzLWVhc3QtMSJHMEUCIBBhjEZCV3D
WU1q5f1Ar3KI+zqMRFL0LeCjSzZYgJY
+GAiEA1DRjC+EZN
+YdTQn8VnOA63Va92FY8ypHjTDVX
+9415UqvAUIj//////////
ARAFGgwwNTkwMDM1NDY4NjUiDINh7> DOI:
10.1016/j.matlet.2004.05.074**

- LIANG XINGHUA ET AL: "First-principle Study on Sr-doped LiNi0.5Mn1.5O4", vol. 14, no. 7, 1 July 2019 (2019-07-01), Serbia, pages 6315 - 6324, XP093065300, ISSN: 1452-3981, Retrieved from the Internet <URL:https://pdf. sciencedirectassets.com/783334/ 1-s2.0-S1452398119X58009/ 1-s2.0-S1452398123123741/main.pdf? X-Amz-Security-Token=IQoJb3JpZ2luX2VjEA QaCXVzLWVhc3QtMSJGMEQCIHn/7aIldcJcT5 +sfJ+UNuRlrJyT0Wn4Q6PLT6ZQ/ USsAiBHF4fqArd+wj5CflET2Bl5Qn/ qg4hBbz21ykiV7J1tgSq7BQiN//////////// 8BEAUaDDA1OTAwMzU0Njg2NSIMKIxfs> DOI: 10.20964/2019.07.73
- ZHANG YU ET AL: "Facile Fabrication Hierarchical Pore Structure Li1.2Mn0.54Ni0.13Co0.13-xSrxO2 Nanofiber for High-Performance Cathode Materials", ES MATERIALS & MANUFACTURING, 1 January 2018 (2018-01-01), XP093065404, ISSN: 2578-0611, DOI: 10.30919/esmm5f201
- LU DI ET AL: "Deciphering the Interface of a High-Voltage (5 V-Class) Li-Ion Battery Containing Additive-Assisted Sulfolane-Based Electrolyte", vol. 3, no. 10, 6 September 2019 (2019-09-06), DE, pages 1900546, XP093065213, ISSN: 2366-9608, Retrieved from the Internet <URL:https://onlinelibrary.wiley.com/doi/ full-xml/10.1002/smtd.201900546> DOI: 10.1002/ smtd.201900546

(52) Cooperative Patent Classification (CPC): (Cont.)
C01P 2006/40; H01M 2004/028; Y02E 60/10

**EP 4 112 559 B1**

**Description**

TECHNICAL FIELD

The present disclosure generally relates to a positive electrode active material for a non-aqueous electrolyte secondary battery and to a non-aqueous electrolyte secondary battery using the positive electrode active material.

BACKGROUND ART

A positive electrode active material included in a non-aqueous electrolyte secondary battery may undergo a side reaction with an electrolyte, resulting in lowered battery capacity with repeated charge and discharge. This tendency is particularly significant with a battery using a positive electrode active material with a high energy density. Patent Literature 1 discloses a positive electrode active material in which a surface of a spinel-type lithium-manganese-based oxide is coated with nanoparticles of an olivine-type lithium metal phosphate oxide or the like. Patent Literature 2 discloses a positive electrode active material in which fine particles of an oxide of a metal element such as Zr adhere on a surface of a lithium-containing composite oxide.

CITATION LIST

PATENT LITERATURES

PATENT LITERATURE 1: Japanese Unexamined Patent Application Publication No. 2013-191540
PATENT LITERATURE 2: Japanese Unexamined Patent Application Publication No. 2012-138197
LIANG XINGHUA ET AL: "First-principle Study on Sr-doped LiNi0.5Mn1.504",INTERNATIONAL JOURNAL OF ELECTROCHEMICAL SCIENCE, vol. 14, no. 7, 1 July 2019 (2019-07-01), pages 6315-6324, DOI: 10.20964/2019.07.73, discloses cathode material of formula Li-Ni0.5Mn1.3755r0.125O4.

SUMMARY

Secondary batteries using the positive electrode active materials disclosed in Patent Literature 1 and Patent Literature 2 have improved durability but lower battery capacity compared with a secondary battery using an uncoated positive electrode active material. The positive electrode active materials disclosed in Patent Literature 1 and Patent Literature 2 still have room for improvement in the battery capacity.

A positive electrode active material for a non-aqueous electrolyte secondary battery of an aspect of the present disclosure includes a lithium-transition metal composite oxide capable of occluding and releasing Li, wherein the positive electrode active material includes $SrMnO_3$ inside or outside secondary particles of the lithium-transition metal composite oxide.

A non-aqueous electrolyte secondary battery of an aspect of the present disclosure comprises: a positive electrode including the positive electrode active material for a non-aqueous electrolyte secondary battery; a negative electrode; and an electrolyte.

According to an aspect of the present disclosure, the durability and battery capacity of the secondary battery may be improved.

BRIEF DESCRIPTION OF DRAWINGS

FIG. 1 is a longitudinal sectional view of a cylindrical secondary battery of an example of an embodiment.
FIG. 2 is X-ray diffraction patterns in Example 2 and Comparative Example 3.

DESCRIPTION OF EMBODIMENTS

A positive electrode active material in which a surface of a lithium-transition metal composite oxide is coated with an oxide or the like can inhibit side reactions of decomposition of an electrolyte and elution of a transition metal element from the positive electrode active material with charge and discharge of the battery. However, the coating makes lithium ions difficult to move, and may lower the battery capacity. The present inventors have intensively investigated the above problem, and as a result, have found that use of a positive electrode active material in which $SrMnO_3$ is present inside or outside secondary particles of a lithium-transition metal composite oxide can improve the durability and battery capacity of the secondary battery. $SrMnO_3$ is considered to inhibit the side reactions and to have relatively good lithium-ion conductivity.

Hereinafter, an example of an embodiment of a non-aqueous electrolyte secondary battery according to the present disclosure will be described in detail. Hereinafter, a cylindrical battery housing a wound electrode assembly in a cylindrical battery case will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. A shape of the battery case is not limited to be cylindrical shape, and may be, for example, a rectangular shape, a coin shape, or the like, and may be a battery case constituted of laminated sheets including a metal layer and a resin layer.

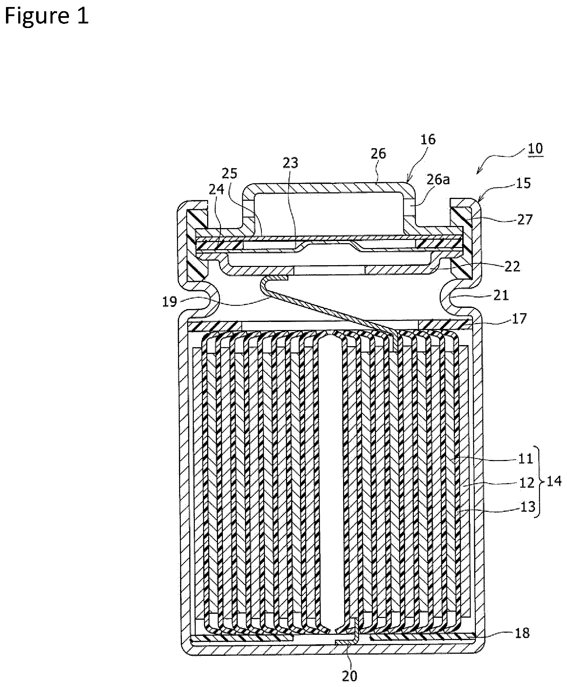

FIG. 1 is an axial sectional view of a cylindrical secondary battery 10 of an example of an embodiment. In the secondary battery 10 illustrated in FIG. 1, an electrode assembly 14 and a non-aqueous electrolyte are housed in an exterior housing body 15. The electrode assembly 14 has a wound structure in which a positive electrode 11 and a negative electrode 12 are wound with a separator 13 interposed therebetween. For a non-aqueous solvent (organic solvent) of the non-aqueous electrolyte, carbonates, lactones, ethers, ketones, esters, and the like may be used, and two or more of these solvents may be mixed to be used. When two or more of the solvents are mixed to be used, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt of the non-aqueous electrolyte, $LiPF_6$, $LiBF_4$, $LiCF_3SO_3$, and the like, and a mixture thereof may be used. An amount of the electrolyte salt dissolved in the non-aqueous solvent may be, for example, 0.5 to 2.0 mol/L. Hereinafter, for convenience of description, the sealing assembly 16 side will be described as the "upper side", and the bottom side of the exterior housing body 15 will be described as the "lower side".

An opening end part of the exterior housing body 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. A negative electrode lead 20 extends through a through hole of the insulating plate 18 toward the bottom side of the exterior housing body 15, and is welded to a bottom inner face of the exterior housing body 15. In the secondary battery 10, the exterior housing body 15 becomes a negative electrode terminal. When the negative electrode lead 20 is provided on the terminal end part, the negative electrode lead 20 extends through an outside of the insulating plate 18 toward the bottom side of the exterior housing body 15, and is welded to the bottom inner face of the exterior housing body 15.

The exterior housing body 15 is, for example, a bottomed cylindrical metallic exterior housing can. A gasket 27 is provided between the exterior housing body 15 and the sealing assembly 16 to achieve sealability inside the secondary battery 10. The exterior housing body 15 has a grooved part 21 formed by, for example, pressing the side part thereof from the outside to support the sealing assembly 16. The grooved part 21 is preferably formed in a circular shape along a circumferential direction of the exterior housing body 15, and supports the sealing assembly 16 with the gasket 27 interposed therebetween and with the upper face of the grooved part 21.

The sealing assembly 16 has the filter 22, a lower vent member 23, an insulating member 24, an upper vent member 25, and the cap 26 which are stacked in this order from the electrode assembly 14 side. Each member constituting the sealing assembly 16 has, for example, a disk shape or a ring shape, and each member except for the insulating member 24 is electrically connected each other. The lower vent member 23 and the upper vent member 25 are connected each other at each of central parts thereof, and the insulating member 24 is interposed between each of the circumferential parts of the vent members 23 and 25. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both the members. If the internal pressure further increases, the upper vent member 25 breaks, and gas is discharged through an opening 26a of the cap 26.

Hereinafter, the positive electrode 11, negative electrode 12, and separator 13, which constitute the secondary battery 10, particularly the positive electrode active material included in a negative electrode mixture layer constituting the positive electrode 11 will be described in detail.

[Positive Electrode]

The positive electrode 11 has, for example, a positive electrode core such as a metal foil and a positive electrode mixture layer formed on the positive electrode core. For the positive electrode core, a foil of a metal stable within a potential range of the positive electrode, such as aluminum, a film in which such a metal is disposed on a surface layer thereof, and the like may be used. The positive electrode mixture layer includes, for example, a positive electrode active material, a binder, a conductive agent, and the like. The positive electrode may be produced by, for example, applying a positive electrode mixture slurry including the positive electrode active material, the binder, the conductive agent, and the like on the positive electrode core and drying to form the positive electrode mixture layer, and then rolling this positive electrode mixture layer.

Examples of the conductive agent included in the positive electrode mixture layer may include carbon-based particles such as carbon black (CB), acetylene black (AB), Ketjenblack, and graphite. These materials may be used singly, or may be used in combination of two or more thereof.

Examples of the binder included in the positive electrode mixture layer may include fluororesins such as polytetrafluoroethylene (PTFE) and polyvinylidene fluoride (PVdF), polyacrylonitrile (PAN), a polyimide resin, an acrylic resin, and a polyolefin resin. These materials may be used singly, or may be used in combination of two or more thereof.

The positive electrode active material includes a lithium-transition metal composite oxide capable of occluding and releasing Li. The lithium-transition metal composite oxide may have a spinel structure. The spinel structure of the lithium-transition metal composite oxide may be confirmed by X-ray diffraction method (XRD).

The lithium-transition metal composite oxide is, for example, a secondary particle formed by aggregation of primary particles. The particle diameter of the primary particles constituting the secondary particle is, for example, 0.05 $\mu$m to 1 $\mu$m. The particle diameter of the primary particles is measured as a diameter of a circumscribed circle in a particle image observed with a scanning electron microscope (SEM).

A median diameter (D50) on a volumetric basis of the secondary particles of the lithium-transition metal composite oxide is, for example, 3 $\mu$m to 30 $\mu$m, preferably 5 $\mu$m to 25 $\mu$m, and particularly preferably 7 $\mu$m to 15 $\mu$m. The D50, also referred to as a median diameter, means a particle diameter at which a cumulative frequency is 50% from a smaller particle diameter side in a particle size distribution on a volumetric basis. The particle size distribution of the composite oxide (Z) may be measured by using a laser diffraction-type particle size distribution measuring device (for example, MT3000II, manufactured by MicrotracBEL Corp.) with water as a dispersion medium.

According to the invention, the lithium-transition metal composite oxide is represented by the general formula $Li_{1+\alpha}Ni_{0.5-x}Mn_{1.5-y}M_{x+y}O_aF_b$, wherein $0 \le \alpha \le 0.2$, $0 \le x < 0.2$, $0 \le y < 0.5$, $0 \le b \le 0.2$, $3.8 \le a+b \le 4.2$, and M represents at least one or more elements selected from the group consisting of Ti, Fe, Al, Ge, Si, Nb, Ta, Zr, W, Mo, Sc, Y, and Er, whereby the positive electrode active material includes $SrMnO3$ inside or outside secondary particles of the lithium-transition metal composite oxide; and a mole fraction of Sr contained in $SrMnO3$ based on a total number of moles of metal elements excluding Li contained in the lithium-transition metal composite oxide is 0.1% to 5%. On a mole fraction of each element constituting the lithium-transition metal composite oxide, for example, elements excluding F may be measured by inductively coupled plasma (ICP) atomic emission spectroscopic analysis, and F may be measured by ion chromatograph (IC) measurement.

The above $\alpha$ in $1+\alpha$, which indicates a rate of Li in the lithium-transition metal composite oxide, satisfies $0 \le \alpha \le 0.2$, and preferably satisfies $0 \le \alpha < 1.05$. If $\alpha$ is less than 0, the battery capacity is lowered in some cases compared with the case where $\alpha$ satisfies the above range. If $\alpha$ is more than 0.2, the charge-discharge cycle characteristics are lowered in some cases compared with the case where $\alpha$ satisfies the above range.

The above x in 0.5-x, which indicates a rate of Ni to the total number of moles of metal elements excluding Li in the lithium-transition metal composite oxide, satisfies $0 \le x < 0.2$, preferably satisfies $0 \le x \le 0.15$, and more preferably satisfies $0 \le x \le 0.1$.

The above y in 1.5-y, which indicates a rate of Mn to the total number of moles of metal elements excluding Li in the lithium-transition metal composite oxide, satisfies $0 \le y < 0.5$, preferably satisfies $0 \le y \le 0.3$, and more preferably satisfies $0 \le y \le 0.1$.

The above M to the total number of moles of metal elements excluding Li in the lithium-transition metal composite oxide (M represents at least one or more elements selected from the group consisting of Ti, Fe, Al, Ge, Si, Nb, Ta, Zr, W, Mo, Sc, Y, and Er) is an optional component, and x+y, which indicates a rate thereof, satisfies $x+y \ge 0$.

The above b, which indicates a rate of F in the lithium-transition metal composite oxide, satisfies $0 \le b \le 0.2$, and preferably satisfies $0 \le b \le 0.1$. Containing F in the lithium-transition metal composite oxide improves stability of a crystalline structure of the lithium-transition metal composite oxide. Stabilizing the crystalline structure of the lithium-transition metal composite oxide improves, for example, the durability of the secondary battery.

The positive electrode active material includes $SrMnO_3$ inside or outside the secondary particles of the lithium-transition metal composite oxide. The presence of $SrMnO_3$, which inhibits the side reactions and has relatively good lithium-ion conductivity, inside or outside the secondary particles of the lithium-transition metal composite oxide may improve the durability and battery capacity of the secondary battery.

A mole fraction of Sr contained in $SrMnO_3$ based on the total number of moles of metal elements excluding Li contained in the lithium-transition metal composite oxide is 0.1% to 5%, preferably 0.2% to 5%, and more preferably 2% to 5%.

Hereinafter, for convenience of description, the above lithium-transition metal composite oxide and the positive electrode active material including $SrMnO_3$ included inside or outside the secondary particles of this lithium-transition metal composite oxide are referred to as "composite oxide (Y)". In the present disclosure, the positive electrode active material included in the secondary battery is mainly composed of the composite oxide (Y), and may be composed of substantially only the composite oxide (Y). The positive electrode active material may include a composite oxide other than the composite oxide (Y) or another compound within a range in that an object of the present disclosure is not impaired.

The presence of $SrMnO_3$ in the composite oxide (Y) may be observed by X-ray diffraction method (XRD). A content of $SrMnO_3$ in the composite oxide (Y) may also be measured by XRD.

The composite oxide (Y) may be synthesized by, for example, adding and mixing a Li source and a Sr source with a composite compound (X) containing no Li to be calcined at 200°C to 1050°C. Examples of the composite compound (X) may include a composite oxide, hydroxide, and carbonate compound that contain Ni, Mn, and the like. Examples of the Li source may include LiOH. Examples of the Sr source may include $Sr(OH)_2$, $SrCO_3$, and $Sr(NO_3)_2$. The Sr source may be any of a powdery solid and an aqueous solution dissolving the Sr source. The method of adding the aqueous solution is preferable from a viewpoint of dispersing Sr inside or outside the secondary particles of the lithium-transition metal composite oxide. When the aqueous solution is added, the Sr source is preferably $Sr(NO_3)_2$, which has a high solubility to water, from a viewpoint of easiness of preparing the aqueous solution.

[Negative Electrode]

The negative electrode 12 has, for example, a negative electrode core such as a metal foil and a negative electrode mixture layer provided on a surface of the negative electrode core. For the negative electrode core, a foil of a metal stable within a potential range of the negative electrode, such as copper, a film in which such a metal is disposed on a surface layer thereof, and the like may be used. The negative electrode mixture layer includes, for example, a negative electrode active material and a binder. The negative electrode may be produced by, for example, applying a negative electrode mixture slurry including the negative electrode active material, the binder, and the like on the negative electrode core and drying to form the negative electrode mixture layer, and subsequently rolling this negative electrode mixture layer.

The negative electrode mixture layer includes, for example, a carbon-based active material to reversibly occlude and release lithium ions, as the negative electrode active material. The carbon-based active material is preferably a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material composed of at least one of Si and a Si-containing compound may also be used, and the carbon-based active material and the Si-based active material may be used in combination.

For the binder included in the negative electrode mixture layer, a fluororesin, PAN, a polyimide, an acrylic resin, a polyolefin, and the like may be used similar to that in the positive electrode, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

[Separator]

For the separator, a porous sheet having an ion permeation property and an insulation property is used. Specific examples of the porous sheet include a fine porous thin film, a woven fabric, and a nonwoven fabric. As a material for the separator, a polyolefin such as polyethylene and polypropylene, cellulose, and the like are preferable. The separator may have any of a single-layered structure and a multilayered structure. On a surface of the separator, a heat-resistant layer and the like may be formed.

EXAMPLES

Hereinafter, the present disclosure will be further described with Examples, but the present disclosure is not limited to these Examples.

<Example 1>

[Synthesis of Positive Electrode Active Material]

A nickel-manganese composite hydroxide with a composition of $Ni_{0.5}Mn_{1.5}(OH)_4$ obtained by coprecipitation

was calcined at 500°C to obtain a nickel-manganese composite oxide (X).

Then, the nickel-manganese composite oxide (X), LiOH, and an aqueous solution of $Sr(NO_3)_2$ were mixed so that a molar ratio between the total amount of Ni and Mn, Li, and Sr was 1:0.5:0.002. This mixture was calcined at 900°C for 10 hours, and then crushed to obtain a lithium composite oxide (Y). XRD demonstrated that the lithium composite oxide (Y) included $SrMnO_3$. A mole fraction of Sr contained in $SrMnO_3$ based on the total number of moles of the metal elements excluding Li contained in the lithium-transition metal composite oxide was 0.16%. Since $Sr(NO_3)_2$ used as the raw material was 0.2%, the other Sr is considered to form SrO, and a mole fraction of SrO may be calculated to be 0.04%.

[Production of Positive Electrode]

The above positive electrode active material, acetylene black, and polyvinylidene fluoride (PVdF) were mixed at a solid-content mass ratio of 96.3:2.5:1.2, an appropriate amount of N-methyl-2-pyrrolidone (NMP) was added, and then the mixture was kneaded to prepare a positive electrode mixture slurry. This positive electrode mixture slurry was applied on both surfaces of a positive electrode core made of aluminum foil, the applied film was dried, and then rolled using a roller and cut to a predetermined electrode size to obtain a positive electrode in which the positive electrode mixture layer was formed on both the surfaces of the positive electrode core. An exposed part where a surface of the positive electrode core was exposed was provided at a part of the positive electrode.

[Production of Negative Electrode]

Natural graphite was used as the negative electrode active material. The negative electrode active material, carboxymethyl cellulose sodium salt (CMC-Na), and styrene-butadiene rubber (SBR) were mixed at a solid-content mass ratio of 100:1:1 in an aqueous solution to prepare a negative electrode mixture slurry. This negative electrode mixture slurry was applied on both surfaces of a negative electrode core made of copper foil, the applied film was dried, and then rolled using a roller and cut to a predetermined electrode size to obtain a negative electrode in which the negative electrode mixture layer was formed on both the surfaces of the negative electrode core. An exposed part where a surface of the negative electrode core was exposed was provided at a part of the negative electrode.

[Preparation of Non-Aqueous Electrolyte]

Fluoroethylene carbonate (FEC), ethylene carbonate (EC), and ethyl methyl carbonate (EMC) were mixed at a volume ratio of 1:1:6 to obtain a non-aqueous solvent. Into the non-aqueous solvent, $LiPF_6$ was dissolved at a concentration of 1.0 mol/L to obtain a non-aqueous electrolyte.

[Production of Battery]

An aluminum lead was attached to the exposed part of the positive electrode, a nickel lead was attached to the exposed part of the negative electrode, the positive electrode and the negative electrode were spirally wound with a separator made of polyolefin interposed therebetween, and then press-formed in the radial direction to produce a flat, wound electrode assembly. This electrode assembly was housed in an exterior housing body composed of an aluminum laminated sheet, the above non-aqueous electrolyte was injected thereinto, and then an opening of the exterior housing body was sealed to obtain a non-aqueous electrolyte secondary battery having a designed capacity of 650 mAh.

[Evaluation of Capacity Maintenance Rate]

First, under a temperature environment at 25°C, the battery produced above was charged at a constant current of 0.2 C until a battery voltage reached 4.9 V, and charged at a constant voltage of 4.9 V until a current value reached 0.02 C. Then, the battery was discharged at a constant current of 0.2 C until the battery voltage reached 3.0 V. A battery after this charge-discharge cycle was repeated 7 times was specified as an initial battery.

On the initial battery, the following cycle test was performed. A discharge capacity at the 1st cycle and a discharge capacity at the 19th cycle in the cycle test were determined to calculate a capacity maintenance rate with the following formula.

Capacity Maintenance Rate (%) = (Discharge Capacity at 19th Cycle / Discharge Capacity at 1st Cycle) $\times$ 100

<Cycle Test>

Under a temperature environment at 25°C, a test cell was charged at a constant current of 0.2 C until a battery voltage reached 4.9 V, and charged at a constant voltage of 4.9 V until a current value reached 0.02 C. Then, the test cell was discharged at a constant current of 0.2 C until the battery voltage reached 3.0 V. This charge-discharge cycle was repeated 19 times.

<Example 2>

A battery was produced to perform the evaluation in the same manner as in Example 1 except that the nickel-manganese composite oxide (X), LiOH, and the aqueous solution of $Sr(NO_3)_2$ were mixed so that a molar ratio between the total amount of Ni and Mn, Li, and Sr was 1:0.5:0.02. XRD demonstrated that the lithium composite oxide (Y) included $SrMnO_3$. A mole fraction of Sr contained in $SrMnO_3$ based on the total number of moles of the metal elements excluding Li contained in the lithium-transition metal composite oxide was 0.96%.

<Comparative Example 1>

A battery was produced to perform the evaluation in the same manner as in Example 1 except that no Sr source was added, and the nickel-manganese composite oxide (X) and LiOH were mixed so that a molar ratio between the total amount of Ni and Mn, and Li was 1:0.5. XRD detected no peak derived from $SrMnO_3$ in the lithium composite oxide (Y).

<Comparative Example 2>

A battery was produced to perform the evaluation in the same manner as in Comparative Example 1 except that the aqueous solution of $Sr(NO_3)_2$ was added and mixed into the lithium composite oxide (Y) obtained in Comparative Example 1 so that a molar ratio between the total amount of Ni and Mn, and Sr was 1:0.002, calcined at 900°C for 10 hours, and crushed to synthesize a lithium composite oxide (Z), and this lithium composite oxide (Z) was used as the positive electrode active material. XRD detected no peak derived from $SrMnO_3$ in the lithium composite oxide (Y).

<Comparative Example 3>

A battery was produced to perform the evaluation in the same manner as in Comparative Example 2 except that the aqueous solution of $Sr(NO_3)_2$ was added and mixed into the lithium composite oxide (Y) obtained in Comparative Example 1 so that a molar ratio between the total amount of Ni and Mn, and Sr was 1:0.02. XRD detected no peak derived from $SrMnO_3$ in the lithium composite oxide (Y).

Table 1 summarizes the results of the discharge capacity at the 19th cycle and the capacity maintenance rate of the batteries in Examples and Comparative Examples. Table 1 also shows the presence or absence of $SrMnO_3$ detected, the mole fraction of $SrMnO_3$, and the mole fraction of SrO calculated from the difference between the amount added and the mole fraction of $SrMnO_3$.

[Table 1]

|  | Presence or absence of $SrMnO_3$ peak | Mole fraction of $SrMnO_3$ [mol%] | Mole fraction of SrO [mol%] | Discharge capacity [mAh/g] | Capacity maintenance rate [%] |
|---|---|---|---|---|---|
| Example 1 | Presence | 0.16 | 0.04 | 140.6 | 98.6 |
| Example 2 | Presence | 0.96 | 1.04 | 140.6 | 98.9 |
| Comparative Example 1 | Absence | - | 0 | 133.4 | 97.9 |
| Comparative Example 2 | Absence | - | 0.2 | 132.1 | 98.2 |
| Comparative Example 3 | Absence | - | 2 | 130.5 | 98.8 |

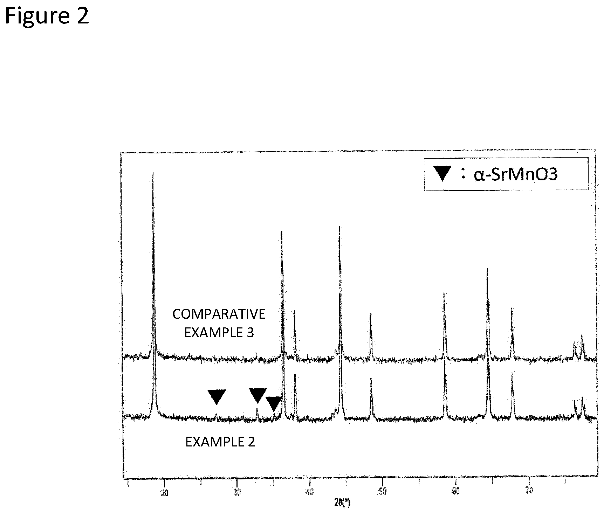

Any of the batteries of Examples had higher discharge capacity and capacity maintenance rate than the batteries of Comparative Examples. The battery of Comparative Example 3 had a high capacity maintenance rate, but a low discharge capacity. As an example indicating the peak derived from $SrMnO_3$, FIG. 2 shows X-ray diffraction patterns in Example 2 and Comparative Example 3.

REFERENCE SINGS LIST

10 Secondary battery

11 Positive electrode

12 Negative electrode

12a Winding terminal end part

13 Separator

14 Electrode assembly

15 Exterior housing body

16 Sealing assembly

17, 18 Insulating plate

19 Positive electrode lead

20 Negative electrode lead

21 Grooved part

22 Filter

23 Lower vent member

24 Insulating member

25 Upper vent member

26 Cap

26a Opening

27 Gasket

**Claims**

1. A positive electrode active material for a non-aqueous electrolyte secondary battery, the positive electrode active material including:

    a lithium-transition metal composite oxide capable of occluding and releasing Li, wherein
    the lithium-transition metal composite oxide is represented by the general formula $Li_{1+\alpha}Ni_{0.5-x}Mn_{1.5-y}M_{x+y}O_aF_b$,
    wherein $0 \leq \alpha \leq 0.2$, $0 \leq x < 0.2$, $0 \leq y < 0.5$, $0 \leq b \leq 0.2$, $3.8 \leq a+b \leq 4.2$, and M represents at least one or more elements selected from the group consisting of Ti, Fe, Al, Ge, Si, Nb, Ta, Zr, W, Mo, Sc, Y, and Er;
    the positive electrode active material includes $SrMnO_3$ inside or outside secondary particles of the lithium-transition metal composite oxide; and
    a mole fraction of Sr contained in $SrMnO_3$ based on a total number of moles of metal elements excluding Li contained in the lithium-transition metal composite oxide is 0.1% to 5%.

2. A non-aqueous electrolyte secondary battery (10), comprising:

    a positive electrode (11) including the positive electrode active material for a non-aqueous electrolyte secondary battery according to claim 1;
    a negative electrode (12); and

an electrolyte.

**Patentansprüche**

1. Aktives Material für eine positive Elektrode für eine Sekundärbatterie mit wasserfreiem Elektrolyt, wobei das aktive Material der positiven Elektrode Folgendes aufweist:

ein Lithium-Übergangsmetall-Verbundoxid, das in der Lage ist, Li einzuschließen und freizusetzen, wobei das Lithium-Übergangsmetall-Verbundoxid durch die allgemeine Formel $Li_{1+\alpha}Ni_{0,5-x}Mn_{1,5-y}M_{x+y}O_aF_b$ dargestellt wird, wobei $0 \leq \alpha \leq 0,2$, $0 \leq x < 0,2$, $0 \leq y < 0,5$, $0 \leq b \leq 0,2$, $3,8 \leq a+b \leq 4,2$ ist, und M mindestens ein oder mehrere Elemente ausgewählt aus der Gruppe bestehend aus Ti, Fe, Al, Ge, Si, Nb, Ta, Zr, W, Mo, Sc, Y und Er darstellt;
das aktive Material der positiven Elektrode $SrMnO_3$ innerhalb oder außerhalb von Sekundärteilchen des Lithium-Übergangsmetall-Verbundoxids enthält; und
ein Molanteil von Sr, der in $SrMnO_3$ enthalten ist, bezogen auf die Gesamtmolzahl der Metallelemente außer Li, die in dem Lithium-Übergangsmetall-Verbundoxid enthalten sind, 0,1 % bis 5 % beträgt.

2. Sekundärbatterie (10) mit wasserfreiem Elektrolyt, umfassend:

eine positive Elektrode (11), die das aktive Material der positiven Elektrode für eine Sekundärbatterie mit nichtwässrigem Elektrolyt nach Anspruch 1 enthält;
eine negative Elektrode (12); und
einen Elektrolyt.

**Revendications**

1. Matériau actif d'électrode positive pour une batterie rechargeable à électrolyte non aqueux, le matériau actif d'électrode positive incluant :

un oxyde composite de lithium et de métal de transition capable d'occlure et de libérer du Li, dans lequel
l'oxyde composite de lithium et de métal de transition est représenté par la formule générale $Li_{1+\alpha}Ni_{0,5-x}Mn_{1,5-y}M_{x+y}O_aF_b$ dans laquelle $0 \leq \alpha \leq 0,2$, $0 < x < 0,2$, $0 \leq y \leq 0,5$, $0 \leq b < 0,2$, $3,8 \leq a+b < 4,2$, et M représente au moins un ou plusieurs éléments choisis dans le groupe constitué par Ti, Fe, Al, Ge, Si, Nb, Ta, Zr, W, Mo, Sc, Y et Er ;
le matériau actif d'électrode positive inclut $SrMnO_3$ à l'intérieur ou à l'extérieur de particules secondaires de l'oxyde composite de lithium et de métal de transition ; et
la fraction molaire de Sr contenu dans le $SrMnO_3$ par rapport au nombre total de moles d'éléments métalliques à l'exclusion du Li contenus dans l'oxyde composite de lithium et de métal de transition est de 0,1 % à 5 %.

2. Batterie rechargeable à électrolyte non aqueux (10) comprenant :

une électrode positive (11) incluant le matériau actif d'électrode positive pour une batterie rechargeable à électrolyte non aqueux selon la revendication 1 ;
une électrode négative (12) ; et
un électrolyte.

# Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013191540 A

- JP 2012138197 A

**Non-patent literature cited in the description**

- **LIANG XINGHUA**. First-principle Study on Sr-doped LiNi0.5Mn1.504. *INTERNATIONAL JOURNAL OF ELECTROCHEMICAL SCIENCE*, 01 July 2019, vol. 14, 6315-6324